(19) Europäisches Patentamt
European Patent Office
Office européen des brevets

(11) **EP 1 215 650 B1**

(12) **EUROPÄISCHE PATENTSCHRIFT**

(45) Veröffentlichungstag und Bekanntmachung des Hinweises auf die Patenterteilung:
**15.02.2012 Patentblatt 2012/07**

(51) Int Cl.:
*G09G 3/28* (2006.01)     *G09G 3/20* (2006.01)

(21) Anmeldenummer: **01124493.6**

(22) Anmeldetag: **12.10.2001**

(54) **Verfahren und Vorrichtung zur Rauschreduktion bei einer pulsbreitengesteuerten Bildanzeigevorrichtung**

Method and apparatus for noise reduction in a pulse-width modulated image display system

Méthode et dispositif de réduction de bruit dans un dispositif d'affichage d'image à modulation de largeur d'impulsion

(84) Benannte Vertragsstaaten:
**AT BE CH CY DE DK ES FI FR GB GR IE IT LI LU MC NL PT SE TR**

(30) Priorität: **14.10.2000 DE 10051074**

(43) Veröffentlichungstag der Anmeldung:
**19.06.2002 Patentblatt 2002/25**

(73) Patentinhaber: **Grundig Multimedia B.V.**
**1077 ZX Amsterdam (NL)**

(72) Erfinder: **Fischbeck, Udo, Dipl.-Ing.**
**90766 Fürth (DE)**

(74) Vertreter: **LOUIS, PÖHLAU, LOHRENTZ**
**Patentanwälte**
**Postfach 30 55**
**90014 Nürnberg (DE)**

(56) Entgegenhaltungen:
**DE-A1- 3 423 112     DE-A1- 19 837 307**
**JP-A- 5 083 129**

**Beschreibung**

Die Erfindung betrifft ein Verfahren und eine Vorrichtung zur Rauschredution bei einer pulsbreitengesteuerten Bildanzeigevorrichtung.

Ein derartiges Verfahren und eine derartige Vorrichtung kommen beispielsweise bei Plasmadisplays zum Einsatz, welche in Zukunft die bei höherwertigen Fernsehgeräten derzeit noch verwendeten Farbbildröhren ergänzen oder ersetzen werden. Im Zusammenhang mit Farbbildröhren ist der Benutzer hochwertiger Fernsehgeräte seit dem Ende der 80er Jahre aufgrund der 100-Hz-Technologie an eine flackerfreie Darstellung gewöhnt.

Aus der Zeitschrift Radio Fernsehen Elektronik RFE, Heft 2, 1997, Seiten 18-20, ist ein Plasmadisplay bekannt, das aus zwei Glasplatten mit matrixartig angeordneten Elektroden besteht, zwischen denen sich ein Edelgasgemisch befindet. Die Bildinformation wird bei Plasmadisplays nicht zeilenweise dargestellt wie bei Kathodenstahlröhren, sondern vollbildweise. Da bei einem Plasmadisplay die einzelnen Bildpunkte nicht zu beliebigen Zeiten einzeln ein- und ausgeschaltet werden können, muss die Aktivierung der Bildpunkte für das gesamte Display in einem Aktivierungsdurchgang erfolgen.

Die Ansteuerung eines Plasmadisplays erfolgt in mehreren Phasen: einer Adressierungs- oder Initialisierungsphase, einer Halte- oder Aktivierungsphase und einer Löschphase.

In der Adressierungs- oder Initialisierungsphase werden alle Zellen des Plasmadisplays vorgeladen, welche in der darauf folgenden Halte- oder Aktivierungsphase aktiviert werden sollen. Im letzten Schritt, der Löschphase, werden die vorgeladenen Zellen wieder entladen, die Bildinformation wird gelöscht.

Das zur Darstellung eines Fernsehbildes zur Verfügung stehende Zeitintervall wird in Teilzeitintervalle unterschiedlicher Dauer bzw. unterschiedlicher Gewichtung zerlegt, während derer in Abhängigkeit vom Helligkeitswert eines jeweiligen Bildpunktes eine vorgegebene Aktivierungssequenz gewählt wird. Dies entspricht einem ein- oder mehrmaligen Aufleuchten des jeweiligen Bildpunktes während des zur Bilddarstellung zur Verfügung stehenden Zeitintervalles, wobei jedem Aufleuchten eine vorgegebene Zeitdauer zugeordnet ist.

Derartige bekannte Plasmadisplays werden beispielsweise von den Firmen Fujitsu, Hitachi und NEC am Markt vertrieben.

Aus der DE 198 33 597 A1 sind ein Verfahren und eine Vorrichtung zur Flimmerreduzierung bei pulsbreitengesteuerten Bildanzeigevorrichtungen bekannt, insbesondere bei einem Farbplasmadisplay. Ein derartiges Farbplasmadisplay dient beispielsweise der Darstellung von Fernsehbildern. Das Farbplasmadisplay wird mittels eines Pulsbreitenmodulators angesteuert, wobei zur Ansteuerung die Dauer eines Fernsehbildes in eine Reihe von Teilbildern bzw. Teilzeitintervallen zerlegt wird, die nacheinander dargestellt werden. Zur Flak-

kerreduzierung, insbesondere einer 50-Hz-Flackerreduzierung, wird die Reihenfolge der Teilzeitintervalle und/oder der Aktivierungssequenzen der Teilzeitintervalle derart vorgegeben, dass das Flackern der darzustellenden Bilder minimal ist.

Weiterhin ist aus der DE 198 37 307 A1 eine bewegungsdetektorabhängige Veränderung der Reihenfolge der Teilzeitintervalle bekannt. Beim Vorliegen von Bewegungen wird die Reihenfolge der Teilzeitintervalle derart gewählt, dass Bewegungsartefakte vermieden werden. Ansonsten erfolgt die Wahl der Reihenfolge der Teilzeitintervalle derart, dass 50Hz-Flackerstörungen reduziert werden.

Weiterhin ist aus WO 0007173 eine pulsbreitengesteuerte Bildanzeigevorrichtung, insbesondere Plasmadisplay, mit Ansteuermitteln zur Ansteuerung eines Bildschirms bekannt. Das für eine Bilddarstellung zur Verfügung stehende Zeitintervall ist hierbei in mehrere zeitlich aufeinanderfolgende Teilzeitintervalle aufgeteilt. Die Bildpunkte der Bildanzeigevorrichtung sind in zwei Teilzeitgruppen aufgeteilt, wobei das einem Bildpunkt zugeordnete Helligkeitssignal aus einem RGB-Signals über ein Aktivierungsschema und einer daraus abgeleiteten Aktivierungssequenz erzeugt wird. Die Bildanzeigevorrichtung weist einen Bewegungsdetektor auf. Die Bildanzeigevorrichtung weist im weiteren Mittel zur Veränderung der Reihenfolge der Teilzeitintervalle und/oder Mittel zur Veränderung der Aktivierungssequenz auf. Die Veränderung der Reihenfolge der Teilzeitintervalle und/oder die Veränderung der Aktivierungssequenz erfolgt in Abhängigkeit vom Ausgangssignal des Bewegungsdetektors.

Ferner ist aus der deutschen Patentanmeldung 100 09 858 ein Verfahren zur Verbesserung des Kontrasts einer pulsbreitengesteuerten Bildanzeigevorrichtung bekannt. Bei diesem Verfahren wird eine Veränderung der maximal zulässigen Leuchtdauer für die Teilzeitintervalle derart vorgenommen, dass die maximal zulässige Leuchtdauer für Teilzeitintervalle mit geringerer Wertigkeit kleineren Änderungen unterworfen wird als die maximal zulässige Leuchtdauer für Teilzeitintervalle mit höherer Wertigkeit.

Aus DE 3423 112 A1 ist ein digitales Amplitudensieb mit steuerbarem Siebpegel offenbart. Hierbei werden Abtastwerte der digitalen Eingangssignale in einem Bereich, der durch ein digitales Schwellwertsignal bestimmt wird, entfernt. Das von einer Steuerschaltung für die Amplitudensiebanordnung erzeugte Schwellwertsignal ist steuerbar aufgrund des Vergleichsergebnisses mindestens eines Teiles des digitalen Eingangssignals mit einem digitalen Bezugssignal.

Aus JP 5083129 A ist ein analog digital Konverter offenbart. Hier werden niederwertige Bits von digitalen Eingangssignalen mittels Schalter unterdrückt, die vor der Inbetriebnahme eingestellt werden.

Ausgehend von diesem Stand der Technik liegt der Erfindung die Aufgabe zugrunde, ein neues Verfahren und eine neue Vorrichtung anzugeben, bei welchen das Rauschen reduziert ist.

Diese Aufgabe wird durch ein Verfahren mit den im Anspruch 1 angegebenen Merkmalen bzw. durch eine Vorrichtung mit den im Anspruch 5 angegebenen Merkmalen gelöst.

Vorteilhafte Ausgestaltungen und Weiterbildungen der Erfindung ergeben sich aus den abhängigen Ansprüchen.

Die Vorteile der Erfindung bestehen insbesondere darin, dass in dunklen Bereichen eines angezeigten Bildes das Rauschen reduziert ist. Damit wird dem Umstand Rechnung getragen, dass bei pulsbreitengesteuerten Bildanzeigevorrichtungen, insbesondere Plasmadisplays, in dunklen Bildbereichen auftretendes Rauschen besonders störend ist. Dies ist darauf zurückzuführen, dass dunklen Bildbereichen kurze Teilzeitintervalle zugeordnet sind. Ist beispielsweise anhand von Rauschen nicht nur das dem LSB eines Mehrbit-Wortes zugeordnete Teilzeitintervall aktiviert, sondern auch das benachbarte Teilzeitintervall LSB+1, dann bedeutet dies bereits eine Verdoppelung der Helligkeit, welche vom menschlichen Auge registriert und als störend empfunden wird.

Dies gilt insbesondere dann, wenn zu einer künstlichen Erhöhung der Anzahl der Graustufen im Sinne eines "Dithering-Vorganges" sowohl das LSB als auch das LSB+1 jeweils auf vier benachbarte Pixel des anzuzeigenden Bildes aufgeteilt werden. In diesem Falle erzeugt vorliegendes Rauschen zusätzlich räumliche Effekte im genannten Viererblock, die für das menschliche Auge störend in Erscheinung treten.

Durch das beanspruchte Ersetzen der niedrigstwertigen Bits durch in einem Speicher abgespeicherte Ersatzwerte erfolgt in dunklen Bildbereichen ein Mittelungsvorgang, durch welchen dort auftretendes Rauschen reduziert wird. In hellen Bildbereichen erfolgt hingegen vorzugsweise keine Veränderung des Bildsignals, da Rauschen in hellen Bildbereichen weniger störend in Erscheinung tritt.

Werden beim Ersatz der geringstwertigen Bits zusätzlich Informationen über den zeitlichen Signalverlauf berücksichtigt, dann erfolgt auch in zeitlicher Richtung ein Mittelungsvorgang, aufgrund dessen auftretendes Rauschen weiter reduziert wird.

Weitere vorteilhafte Eigenschaften der Erfindung ergeben sich aus der Erläuterung eines Ausführungsbeispiels anhand der Figuren. Es zeigt:

Figur 1 eine Skizze zur Erläuterung der Ansteuerung einer pulsbreitengesteuerten Bildanzeigevorrichtung,

Figur 2 ein Blockdiagramm zur Erläuterung eines ersten Ausführungsbeispiels für die Erfindung,

Figur 3 ein Blockdiagramm zur Erläuterung eines zweiten Ausführungsbeispiels für die Erfindung und

Figur 4 ein Zeitdiagramm zur Veranschaulichung der Funktionsweise der Erfindung bei dem in Figur 2 gezeigten Ausführungsbeispiel.

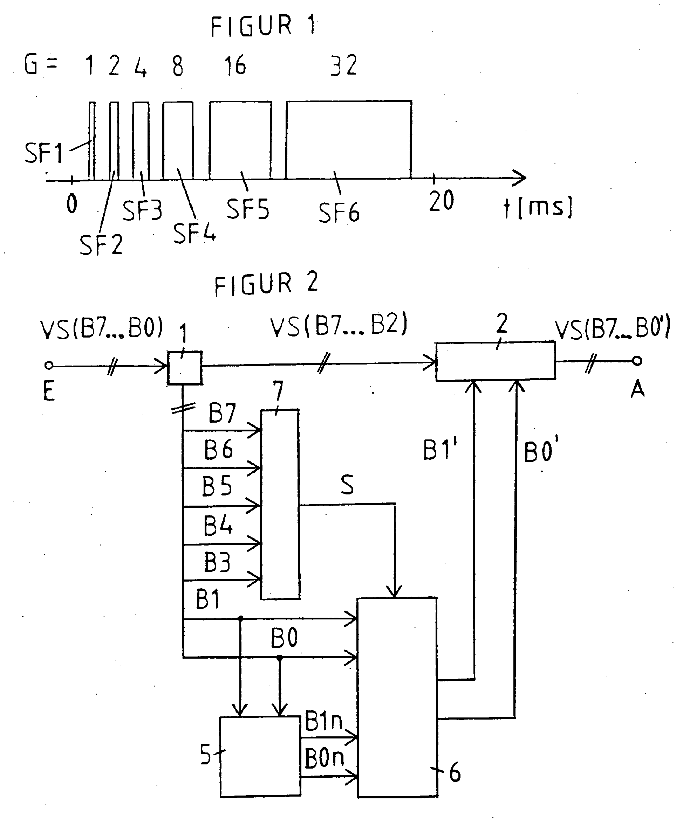

Die Figur 1 zeigt eine Skizze zur Erläuterung der Ansteuerung einer pulsbreitengesteuerten Bildanzeigevorrichtung, beispielsweise eines Plasmadisplays. Das zur Darstellung eines Fernsehbildes zur Verfügung stehende Zeitintervall von 20 Millisekunden wird in Teilzeitintervalle SF1, SF2, ..., SF6 zerlegt. Jedes dieser Teilzeitintervalle weist eine unterschiedliche Dauer bzw. Gewichtung G auf, die in der Figur 1 jeweils oberhalb der die Teilzeitintervalle repräsentierenden Kästchen angegeben ist. Während dieser Teilzeitintervalle wird in Abhängigkeit vom Helligkeitswert eines jeweiligen Bildpunktes eine vorgegebene Aktivierungssequenz gewählt. Dies entspricht einem ein- oder mehrmaligen Aufleuchten des jeweiligen Bildpunktes während des zur Bilddarstellung zur Verfügung stehenden Zeitintervalles, wobei jedem Aufleuchten eine vorgegebene Zeitdauer zugeordnet ist.

Bei dunklen Bildpunkten erfolgt beispielsweise nur ein Aufleuchten während des Teilzeitintervalles SF1, welches dem LSB eines 8-Bit-breiten Videosignals entspricht. Erfolgt aufgrund von Rauschen auch ein Aufleuchten während des Teilzeitintervalles SF2, welches im Vergleich zu SF1 die doppelte zeitliche Länge bzw. Gewichtung aufweist, dann bedeutet dies bereits eine Verdoppelung der Helligkeit, welche vom menschlichen Auge als störend empfunden wird.

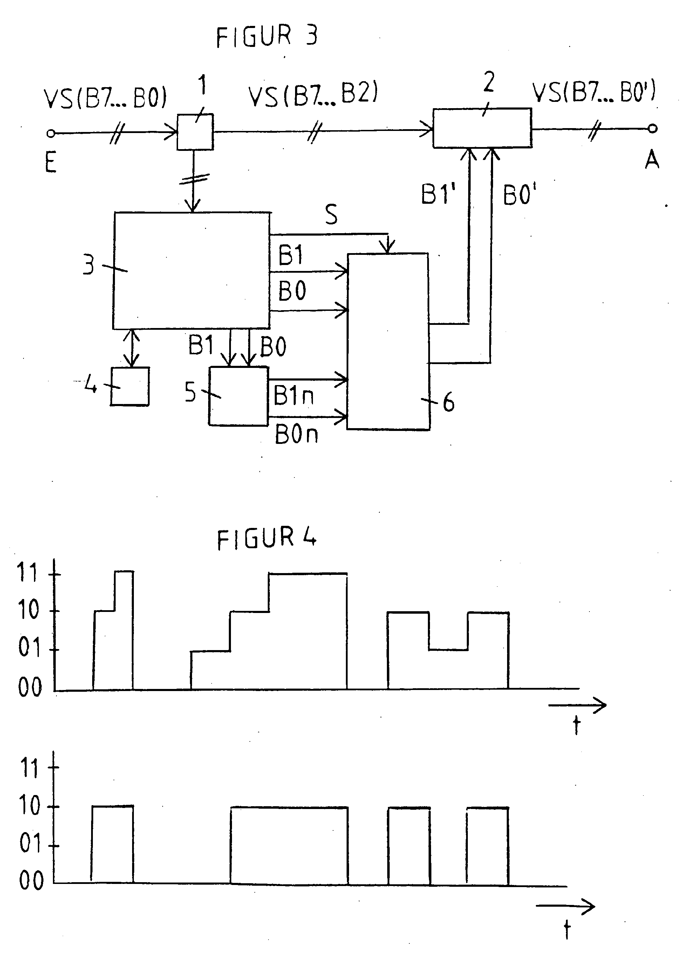

Um derartige durch Rauschen verursachten Störungen zu vermeiden, die vor allem in dunklen Bildbereichen auftreten, erfolgt eine Signalverarbeitung, wie sie in den Figuren 2 und 3 anhand zweier Ausführungsbeispiele für die Erfindung beschrieben ist.

Die Figur 2 zeigt ein Blockdiagramm zur Erläuterung eines ersten Ausführungsbeispiels für die Erfindung. Dem Eingang E wird ein 8-Bit-breites Videoeingangssignal VS(B7, ..., B2, B1, B0) zugeführt, welches dem Helligkeitssignal für einen Bildpunkt des auf dem Plasmadisplay anzuzeigenden Bildes entspricht. Dieses Videoeingangssignal wird in einem Signalsplitter 1 aufgeteilt. Am rechten Ausgang des Signalsplitters 1 steht ein 6-Bit-breites Videosignal zur Verfügung, welches die höherwertigen Bits B7, ..., B2 des Videoeingangssignals aufweist. Am unteren Ausgang des Signalsplitters 1 wird das 8-bit-breite Videoeingangssignal VS(B7, ..., B0) unverändert ausgegeben.

Von dem am unteren Ausgang des Signalsplitters 1 ausgegebenen Signal werden die höherwertigen Bits B7, ..., B3 einem ODER-Gatter 7 zugeführt. In diesem wird überprüft, ob mindestens eines dieser Bits den Bitzustand HIGH aufweist. Dies entspricht einer Überprüfung dahingehend, ob das Videoeingangssignal einen vorgegebenen Helligkeitsschwellenwert übersteigt oder nicht.

Das Ausgangssignal des ODER-Gliedes 7 wird als Schaltersteuersignal S einem Schalter 6 zugeführt.

Ist die Helligkeit des darzustellenden Bildpunktes größer als der Helligkeitsschwellenwert, dann wird der Schalter 6 in seine erste, obere Schaltstellung gebracht, in welcher er für die an seinen beiden oberen Eingängen anliegenden Signale durchlässig ist. Ist die Helligkeit des darzustellenden Bildpunktes hingegen kleiner als der Helligkeitsschwellenwert, dann wird der Schalter 6 in seine zweite, untere Schaltstellung gebracht, in welcher er für die an seinen beiden unteren Eingängen anliegenden Signale durchlässig ist.

Dabei sind an den beiden oberen Eingängen des Schalters 6 die Bits B1 und B0 des Videoeingangssignals angelegt. Die an den beiden unteren Eingängen des Schalters 6 anliegenden Bitsignale B1n und B0n sind aus einem Tabellenspeicher 5 abgeleitet.

Dieser Tabellenspeicher 5 wird durch die Bits B1 und B0 des Videoeingangssignals adressiert. Je nach dem Bitzustand dieser beiden Bits werden am Ausgang des Tabellenspeichers 5 Ausgangsbits zur Verfügung gestellt, die aus der folgenden Tabelle ersichtlich sind:

| Eingangsbits | | Ausgangsbits | |
|---|---|---|---|
| B1 | B0 | B1n | B0n |
| 0 | 0 | 0 | 0 |
| 0 | 1 | 0 | 0 |
| 1 | 0 | 1 | 0 |
| 1 | 1 | 1 | 0 |

Folglich werden am Ausgang des Schalters 6 dann, wenn die Helligkeit des Videoeingangssignals größer ist als der vorgegebene Helligkeitsschwellenwert, die Bits B1 und B0 des Videoeingangssignals unverändert zur Verfügung gestellt, d. h.:

$$B1' = B1 \quad \text{und} \quad B0' = B0.$$

Ist hingegen die Helligkeit des Videoeingangssignals kleiner als der vorgegebene Helligkeitsschwellenwert, dann werden am Ausgang des Schalters 6 aus dem Speicher 5 abgeleitete Bits B1n und B0n zur Verfügung gestellt,
d. h.:

$$B1' = B1n \quad \text{und} \quad B0' = B0n$$

Die Ausgangssignale B1' und B0' des Schalters 6 werden in einem Überlagerer 2 dem 6-Bit-breiten Videosignal mit den Bits B7, ..., B2 hinzugefügt, so dass am Ausgang A der in der Figur 2 dargestellten Vorrichtung ein Videosignal VS mit den Bits B7, ..., B2, B1', B0' zur Verfügung steht. Dieses wird in herkömmlicher Weise in Aktivierungssequenzen umgesetzt, um ein der Helligkeit des Bildpunktes entsprechendes Aufleuchten des Bildpunktes zur erreichen.

Nach alledem erfolgt gemäß der Erfindung eine Überprüfung des Videoeingangssignals dahingehend, ob dessen Helligkeit einen vorgegebenen Helligkeitsschwellenwert übersteigt oder nicht. Dies ist beispielsweise dann der Fall, wenn zumindest eines der Bits B7 bis B3 des 8-Bit-breiten Videoeingangssignals den Bitzustand HIGH aufweist. Übersteigt die Helligkeit des Videoeingangssignals den genannten Helligkeitsschwellenwert, dann wird das 8-Bit-breite Videoeingangssignal unverändert am Ausgang A ausgegeben. Ist die Helligkeit des Videoeingangssignals hingegen kleiner als der Helligkeitsschwellenwert, dann werden die beiden niedrigstwertigen Bits des Videoeingangssignals durch Bits aus einem Tabellenspeicher ersetzt. Diese sind so gewählt, dass bezüglich dieser Bits ein Mittelungsvorgang erfolgt.

Durch ein derartiges Vorgehen wird in vorteilhafter Weise erreicht, dass das in dunklen Bereichen des darzustellenden Bildes auftretende Rauschen reduziert ist.

Die Figur 3 zeigt ein Blockdiagramm zur Erläuterung eines zweiten Ausführungsbeispiels für die Erfindung. Dieses unterscheidet sich von dem in Figur 2 gezeigten ersten Ausführungsbeispiel im wesentlichen dadurch, dass das Schaltersteuersignal für den Schalter 6 mittels eines Controllers 3, beispielsweise eines Mikroprozessors, erzeugt wird. Weiterhin kann der Controller 3 die Ermittlung des Schaltersteuersignals unter zusätzlicher Berücksichtung der in einem Histogrammspeicher 4 abgespeicherten Signale vornehmen, bei welchen es sich um Helligkeitssignale aus zeitlich vorhergehenden Bildern handelt. Dies führt in vorteilhafter Weise zu einer weiteren Reduzierung des Rauschens im dargestellten Bild.

In einer besonders vorteilhaften Ausgestaltung der Erfindung werden zur Berücksichtigung der Helligkeitssignale aus zeitlich vorhergehenden Bildern eine Mittelung der Helligkeitssignale der drei bis vier vorherigen Bilder durchgeführt.

Die Figur 4 zeigt ein Zeitdiagramm zur Veranschaulichung der Funktionsweise der Erfindung bei dem in Figur 2 gezeigten ersten Ausführungsbeispiel. In der oberen Darstellung ist dabei der zeitliche Verlauf des am Eingang E anliegenden Videoeingangssignals gezeigt, in der unteren Darstellung der zugehörige zeitliche Verlauf des am Ausgang A vorliegenden Videoausgangssignals.

**Patentansprüche**

1. Verfahren zur Rauschreduktion bei einer pulsbreitengesteuerten Bildanzeigevorrichtung, wobei das für eine Bilddarstellung zur Verfügung stehende Zeitintervall in aufeinanderfolgende gewichtete Teilzeitintervalle aufgeteilt wird und die den Bildpunkten des darzustellenden Bildes zugehörigen, in Form von Mehrbit-Wörtern vorliegenden Helligkeitssignale durch Umwandlung in den Teilzeitintervallen zugeordnete Aktivierungssequenzen erzeugt werden, **dadurch gekennzeichnet,** **dass** in einem ersten Schritt überprüft wird, ob die Helligkeit eines darzustellenden Bildpunktes größer ist als ein vorgegebener Helligkeitsschwellenwert, und in einem zweiten Schritt dann,

w enn die Helligkeit des darzustellenden. Bildpunktes größer ist als der vorgegebene Helligkeitsschwellenwert, das zugehörige Mehrbit-Wort in unveränderter Form der Umwandlung in Aktivierungssequenzen zugeführt wird, und dann

w enn die Helligkeit des darzustellenden Bildpunktes kleiner ist als der vorgegebene Helligkeitsschwellenwert, die beiden geringstwertigen Bits des Mehrbit-Wortes durch Bits gemäß einer abgespeicherten Tabelle ersetzt werden; die folgende Ersetzungen definiert:

00 → 00
01 → 00
10 → 10
11 → 10

und das Ergebnis der Umwandlung in Aktivierungssequenzen zugeführt wird.

2. Verfahren nach Anspruch 1, **dadurch gekennzeichnet,** **dass** die Mehrbit-Wörter 8-Bit-Wörter sind, **dass** die Helligkeit des darzustellenden Bildpunktes dann größer ist als der vorgegebene Helligkeitsschwellenwert, wenn mindestens eines der höherwertigen Bits der 8-Bit-Wörter den Bit-Zustand "HIGH" aufweist.

3. Verfahren nach Anspruch 1 oder 2, **dadurch gekennzeichnet,** **dass** für die Entscheidung zum Ersatz der beiden geringstwertigen Bits zusätzlich der zeitliche Signalverlauf berücksichtigt wird.

4. Pulsbreitengesteuerte Bildanzeigevorrichtung, bei welcher das für eine Bilddarstellung zur Verfügung stehende Zeitintervall in aufeinanderfolgende gewichtete Teilzeitintervalle aufgeteilt wird und die den Bildpunkten des darzustellenden Bildes zugehörigen, in Form von Mehrbit-Wörtem vorliegenden Helligkeitssignale durch Umwandlung in den Teilzeitintervallen zugeordnete Aktivierungssequenzen erzeugt werden, **gekennzeichnet durch** eine Vorrichtung zur Rauschreduktion, wobei die Vorrichtung zur Rauschreduktion aufweist:

- einen Eingangsanschluss (E), der zur Aufnahme von Helligkeitssignalen entsprechenden mehrbit-Wörtern ausgebildet ist,
- eine Prüfeinheit (7; 3) zur Überprüfung, ob die Helligkeit eines darzustellenden Bildpunktes größer ist als ein vorgegebener Helligkeitsschwellenwert,
- einen ersten Speicher (5), in welchem Ersatzsignale in einer Tabelle für die beiden geringstwertigen Bits der Mehrbit-Wörter abgespeichert sind, und
- einen von der Prüfeinheit gesteuerten Umschalter (6), der ausgangsseitig dann, wenn die Helligkeit eines darzustellenden Bildpunktes größer ist als der vorgegebene Helligkeitsschwellenwert, die beiden geringstwertigen Bits der Mehrbitwörter in unveränderter Form bereitstellt und dann, wenn die Helligkeit eines darzustellenden Bildpunktes kleiner ist als der vorgegebene Helligkeitsschwellenwert, aus dem ersten Speicher gemäß der tabelle für die beiden geringstwertigen Bits der Mehrbitwörter entnommone Ersatzsignale bereitstellt wobei die Tabelle folgende Ersetzungen definiert:

00 → 00
01 → 00
10 → 10
11 → 10.

5. Vorrichtung nach Anspruch 4, **dadurch gekennzeichnet,** **dass** die Prüfeinheit ein ODER-Glied (7) aufweist, dem eingangsseitig die höherwertigen Bits der Mehrbit-Wörter zugeführt werden.

6. Vorrichtung nach Anspruch 4 oder 5, **dadurch gekennzeichnet,** **dass** der erste Speicher (5) mittels der geringstwertigen Bits der am Eingangsanschluss anliegenden Mehrbit-Wörter adressiert wird.

7. Vorrichtung nach einem der Ansprüche 4 bis 6, **dadurch gekennzeichnet,** **dass** die Vorrichtung einen zweiten Speicher (4) aufweist, der zur Abspeicherung von Helligkeitssignalen vorheriger Bilder vorgesehen ist.

8. Vorrichtung nach Anspruch 7, **dadurch gekennzeichnet,** **dass** die Vorrichtung eine Steuereinheit (3) aufweist, die im zweiten Speicher (4) abgespeicherte Helligkeitssignale bei der Ermittlung des Schaltsteuersignals S für den Umschalter (6) berücksichtigt.

**9.** Vorrichtung nach Anspruch 8,
**dadurch gekennzeichnet,**
**dass** die Vorrichtung bei der Ermittlung des Schaltsteuersignals S den Mittelwert aus den drei bis vier vorangegangenen abgespeicherten Helligkeitssignalen des zweiten Speichers (4) ermittelt.

**Claims**

**1.** Method for noise reduction in a pulse-width-controlled image display apparatus, wherein the interval of time available for image presentation is split into successive weighted component intervals of time and the brightness signals which are associated with the pixels of the image to be presented and which are available in the form of multi-bit words are produced by conversion into activation sequences associated with the component intervals of time,
**characterized**
**in that**, in a first step, a check is performed to determine whether the brightness of a pixel to be presented is greater than a prescribed brightness threshold value,
and, in a second step,

- if the brightness of the pixel to be presented is greater than the prescribed brightness threshold value, the associated multi-bit word is supplied in unaltered form to the conversion into activation sequences, and
- if the brightness of the pixel to be presented is less than the prescribed brightness threshold value, the two least significant bits of the multi-bit word are replaced by bits on the basis of a stored table which defines the following substitutions:

| | | |
|---|---|---|
| 00 | → | 00 |
| 01 | → | 00 |
| 10 | → | 10 |
| 11 | → | 10 |

and the result is supplied to the conversion into activation sequences.

**2.** Method according to Claim 1,
**characterized**
**in that** the multi-bit words are 8-bit words,
**in that** the brightness of the pixel to be presented is greater than the prescribed brightness threshold value if at least one of the more significant bits of the 8-bit words has the bit state "HIGH".

**3.** Method according to Claim 1 or 2,
**characterized**

**in that** the signal profile over time is additionally taken into account for the decision regarding the replacement of the two least significant bits.

**4.** Pulse-width-controlled image display apparatus, in which the interval of time available for image presentation is split into successive weighted component intervals of time, and the brightness signals which are associated with the pixels of the image to be presented and which are available in the form of multi-bit words are produced by conversion into activation sequences associated with the component intervals of time, **characterized by** an apparatus for noise reduction, wherein the apparatus for noise reduction has:

- an input port (E) which is designed to receive multi-bit words corresponding to brightness signals,
- a checking unit (7; 3) for checking whether the brightness of a pixel to be presented is greater than a prescribed brightness threshold value,
- a first memory (5) which stores substitute signals in a table for the two least significant bits of the multi-bit words, and
- a changeover switch (6) which is controlled by the checking unit and the output of which provides the two least significant bits of the multi-bit words in unaltered form if the brightness of a pixel to be presented is greater than the prescribed brightness threshold value and provides substitute signals taken from the first memory on the basis of the table for the two least significant bits of the multi-bit words if the brightness of a pixel to be presented is less than the prescribed brightness threshold value, wherein the table defines the following substitutions:

| | | |
|---|---|---|
| 00 | → | 00 |
| 01 | → | 00 |
| 10 | → | 10 |
| 11 | → | 10. |

**5.** Apparatus according to Claim 4,
**characterized**
**in that** the checking unit has an OR gate (7), the input of which is supplied with the more significant bits of the multi-bit words.

**6.** Apparatus according to Claim 4 or 5,
**characterized**
**in that** the first memory (5) is addressed using the least significant bits of the multi-bit words applied to the input port.

**7.** Apparatus according to one of Claims 4 to 6,

**characterized**

**in that** the apparatus has a second memory (4) which is provided for the purpose of storing brightness signals for preceding images.

8. Apparatus according to Claim 7,
**characterized**
**in that** the apparatus has a control unit (3) which takes account of brightness signals stored in the second memory (4) when ascertaining the switching control signal for the changeover switch (6).

9. Apparatus according to Claim 8,
**characterized**
**in that** the apparatus, when ascertaining the switching control signal S, ascertains the mean value from the preceding three to four stored brightness signals in the second memory (4).

**Revendications**

1. Procédé destiné à réduire le bruit dans le cas d'un dispositif d'affichage d'image commandé par amplitude d'impulsion, l'intervalle de temps mis à disposition pour une représentation d'image étant divisés en intervalles de temps partiel pondérés et consécutifs et les signaux de luminosité spécifiques aux points de l'image à représenter et se présentant sous forme de mots à plusieurs bits étant générés par conversion en séquences d'activation attribuées aux intervalles de temps partiel,
**caractérisé en ce qu'**on vérifie dans une première étape si la luminosité d'un point d'image à représenter est plus grande qu'une valeur seuil de luminosité prédéfinie, et dans une seconde étape dans les cas

- où la luminosité du point d'image à représenter est plus grande que la valeur seuil de luminosité prédéfinie, le mot à plusieurs bits spécifique est amené dans une forme non modifiée de conversion en séquences d'activation, et dans les cas
- où la luminosité du point d'image à représenter est inférieure à la valeur seuil de luminosité prédéfinie, les deux bits ayant la plus faible valeur du mot à plusieurs bits sont remplacés par des bits selon un tableau mémorisé, qui définit les remplacements suivants :

    00 → 00
    01 → 00
    10 → 10
    11 → 10

et le résultat de la conversion en séquences d'activation est amené.

2. Procédé selon la revendication 1,

**caractérisé en ce que**
les mots à plusieurs bits sont des mots de 8 bits,
**en ce que** la luminosité du point d'image à représenter est plus grande que la valeur seuil de luminosité prédéfinie dans les cas où au moins l'un des bits de plus haute valeur des mots à huit bits présente l'état de bit "HIGH".

3. Procédé selon la revendication 1 ou 2,
**caractérisé en ce**
**qu'**on prend en compte en supplément la variation du signal dans le temps pour la décision du remplacement des deux bits ayant la plus faible valeur.

4. Dispositif d'affichage d'image commandé par amplitude d'impulsion, sur lequel l'intervalle de temps mis à disposition pour une représentation d'image est divisé en intervalles de temps partiel pondérés successifs et les signaux de luminosité spécifiques aux points de l'image à représenter et présents sous forme de mots à plusieurs bits sont générés par conversion en séquences d'activation attribuées aux intervalles de temps partiel, **caractérisé par** un dispositif de réduction de bruit, le dispositif présentant pour la réduction de bruit :

    un branchement d'entrée (E) qui est conçu pour l'enregistrement de mots à plusieurs bits correspondants à des signaux de luminosité,
    une unité de test (7; 3) pour vérifier si la luminosité d'un point d'image à représenter est plus grande qu'une valeur seuil de clarté prédéfinie,
    une première mémoire (5), dans laquelle des signaux de remplacement sont mémorisés dans un tableau pour les deux bits de plus faible valeur des mots à plusieurs bits, et
    - un inverseur (6) commandé par l'unité de test, qui met à disposition côté sortie, dans les cas où la luminosité d'un point d'image à représenter est supérieure à la valeur seuil de luminosité prédéfinie, les deux bits ayant la plus faible valeur des mots à plusieurs bits dans une forme non modifiée et, dans les cas où la luminosité d'un point d'image à représenter est inférieure à la valeur seuil de luminosité prédéfinie, des signaux de remplacement prélevés dans la première mémoire selon le tableau pour les deux bits ayant la plus faible valeur des mots à plusieurs bits, le tableau définissant les remplacements suivants :

    00 → 00
    01 → 00
    10 → 10
    11 → 10

5. Dispositif selon la revendication 4,
**caractérisé en ce que**

l'unité de test présente un élément OU (7) auquel les bits de plus haute valeur des mots à plusieurs bits sont amenés côté entrée.

6. Dispositif selon la revendication 4 ou 5, **caractérisé en ce que** la première mémoire (5) est adressée au moyen des bits ayant la plus faible valeur des mots à plusieurs bits s'appliquant sur le branchement d'entrée.

7. Dispositif selon l'une des revendications 4 à 6, **caractérisé en ce que** le dispositif présente une seconde mémoire (4), qui est prévue pour le stockage de signaux de luminosité d'images précédentes.

8. Dispositif selon la revendication 7, **caractérisé en ce que** le dispositif présente une unité de commande (3) qui prend en compte des signaux de luminosité stockés dans la seconde mémoire (4) pour le calcul du signal de commande de commutation S pour l'inverseur (6).

9. Dispositif selon la revendication 8, **caractérisé en ce que** le dispositif détermine lors du calcul du signal de commande de commutation S la valeur moyenne à partir des trois à quatre signaux de luminosité stockés précédents de la seconde mémoire (4).

## FIGUR 1

G = 1 2 4 8 16 32

SF1

0 20 t [ms]

SF3 SF5 SF6

SF2 SF4

## FIGUR 2

VS(B7...B0) 1 VS(B7...B2) 2 VS(B7...B0')

E A

B7 7
B6
B5 S
B4
B3
B1

B0 6

B1' B0'

5 B1n
B0n

## FIGUR 3

VS(B7...B0)  1  VS(B7...B2)  2  VS(B7...B0')

E  A

B1'  B0'

S

3  B1  B0

B1  B0

4  5  B1n  6

B0n

## FIGUR 4

**EP 1 215 650 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19833597 A1
- DE 19837307 A1
- WO 0007173 A
- DE 10009858
- DE 3423112 A1
- JP 5083129 A

**In der Beschreibung aufgeführte Nicht-Patentliteratur**

- *Radio Fernsehen Elektronik RFE,* 1997, vol. 2, 18-20